# FASCICULE DE BREVET EUROPEEN

(11) **EP 1 160 607 B1**
(45) Date de publication et mention de la délivrance du brevet: **17.05.2006**
(21) Numéro de dépôt: 01401340.3
(22) Date de dépôt: 22.05.2001
(51) Int. Cl.: G02B 6/44

(54) **Peau de protection pour fibres optiques**
Schutzmantel für optische Fasern
Protection coating for optical fibres

(30) Priorité: 29.05.2000 FR 0006838
(43) Date de publication de la demande: 05.12.2001
(73) Titulaire: Draka Comteq B.V., 1021 JZ Amsterdam (NL)
(72) Inventeur: Bourget, Vincent, 62200 Boulogne sur Mer (FR); Drabczyk, Nelly, 62100 Calais (FR)
(74) Mandataire: Blokland, Arie

(56) Documents cités:
- EP-A- 0 163 427
- EP-A- 0 295 336
- EP-A- 0 760 108
- EP-A- 0 769 711
- EP-A- 1 024 382

## Description

La présente invention concerne les câbles de télécommunications. Elle concerne plus particulièrement les câbles comprenant des fibres optiques disposées dans un tube en élastomère thermoplastique à segments souples diol, et notamment en élastomère thermoplastique polyester.

Un câble de fibres optiques est constitué en général d'une gaine et d'éléments de renfort de protection métalliques ou diélectriques entourant plusieurs modules. Plusieurs fibres entourées d'un tube de protection. Ces tubes ont pour but de protéger les fibres aussi bien sur le plan mécanique que chimique et servent aussi à l'identification des modules. A titre d'exemple un câble à 144 fibres comprend douze tubes contenant chacun 12 fibres, assemblées autour d'un porteur central, le tout étant entouré d'une gaine en polyéthylène. Les fibres sont individuellement colorées dans chaque tube, et les tubes sont eux-mêmes colorés.

Il est connu de disposer les fibres optiques dans des tubes rigides et épais, qui ne sont pas directement au contact de la fibre. EP-A-0 769 711 décrit de tels tubes. WO-A-96 23239 ou EP-A-0 968 809 sont d'autres exemples de tubes rigides et épais, en copolymère polyéthylène/polypropylène chargé ou en une matrice thermoplastique avec des éléments de rigidification. Cependant, ces tubes ont notamment pour inconvénient de ne pas permettre l'accès aux fibres avec les doigts, sans l'utilisation d'outils spéciaux et de ne pas être très souples.

Pour protéger la fibre optique dans le câble de télécommunication, on connaît aussi des tubes flexibles, qui sont extrudés directement sur la fibre. Ce type de tube est alors aussi qualifié de "peau".

Une solution de ce type est décrite dans la demande de brevet européen 00 400 187.1 du 25.01.00 au nom de la demanderesse. Ce document indique qu'il est connu d'utiliser pour une peau du chlorure de polyvinyle plastifié (PVC), et quelques polyoléfines; ce document propose d'utiliser pour un revêtement flexible de fibre optique un matériau élastomère thermoplastique à base de polyoléfine avec un module d'élasticité d'environ 500 MPa à température ambiante et un module d'élasticité d'environ 1500 MPa à -40°C. Un exemple est un copolymère de propylène et d'éthylène (EPR). Comme l'indique aussi ce document, une telle peau doit présenter des propriétés d'élasticité, en pouvant toutefois être déchirée pour accéder à la fibre qu'elle protège. Un nouveau problème que propose de résoudre l'invention est alors celui du collage lors de la fabrication des gaines.

En effet, la gaine externe est habituellement fabriquée par extrusion de polyéthylène autour des modules assemblés à des températures du polymère fondu pouvant atteindre localement 150°C et même 160°C. Or à une température supérieure au point de fusion des polymères utilisés, les modules risquent de coller ensemble, ce qui peut entraîner une diminution de la protection, tout en rendant plus difficile voire impossible l'accès aux fibres et l'identification.

L'invention vise à proposer une peau de protection pour des fibres optiques rassemblées par modules pour former des câbles, qui permette l'accès aux fibres sans outils et qui résiste à des températures d'au moins 130°C.

Ces problèmes sont résolus selon l'invention par une peau de protection en élastomère thermoplastique à segments souples diol.

L'invention concerne également un procédé de fabrication de tels modules de fibres optiques. Enfin, l'invention propose aussi un câble de fibres optiques comprenant de tels modules.

Plus précisément, l'invention propose un module de câble de télécommunication comprenant autour d'au moins une fibre optique une peau de protection en élastomère thermoplastique à segments souples diol, dont le point de fusion est supérieur à 130°C et dont la résistance initiale au déchirement est inférieure à 120kN/m. Selon un mode de réalisation, l'élastomère thermoplastique est un TEEE et parmi ceux-ci de préférence un copolymère bloc polybutylène téréphtalate glycol.

Selon un aspect de l'invention, l'élastomère peut comprendre une charge, qui peut être choisie parmi le noir de carbone, la silice, le kaolin, l'alumine, l'argile, le talc, la craie, la magnésie, le dioxyde de titane.

Selon un autre aspect de l'invention, l'élastomère thermoplastique comprend un ignifugeant.

Selon un mode de réalisation, l'élastomère thermoplastique possède une dureté Shore D inférieure à 50. Selon un autre mode de réalisation, le point de fusion du matériau de la peau est d'au moins 140°C. Selon encore en autre mode de réalisation, la résistance initiale au déchirement du matériau de la peau est inférieure à 60kN/m. Selon un autre mode de réalisation encore, l'allongement à rupture du matériau de la peau est compris entre 50 et 300%. Selon encore un autre mode de réalisation, la résistance à la traction du matériau de la peau est comprise entre 5 et 15 MPa. Selon un autre mode de réalisation enfin, l'indice de fluidité à chaud du matériau de la peau est supérieur ou égal à 2 g/10min.

L'invention propose également un procédé de fabrication d'un module de câble de télécommunication selon l'invention comprenant l'étape de l'application d'une peau de protection en élastomère thermoplastique à segments souples diols sur ladite au moins une fibre optique. Selon un mode de réalisation, l'application de la peau de protection est réalisée par extrusion.

Enfin, l'invention propose aussi un câble de télécommunication comprenant au moins un module selon l'invention.

D'autres caractéristiques et avantages de l'invention apparaîtront à la lecture de la description qui suit de modes de réalisation de l'invention, donnés à titre d'exemple uniquement, et en référence aux dessins qui montrent :
figure 1 une représentation schématique en coupe d'un module de fibres optiques selon l'invention;
figure 2, une représentation schématique en coupe d'un câble de télécommunication comprenant des modules de fibres optiques selon l'invention.

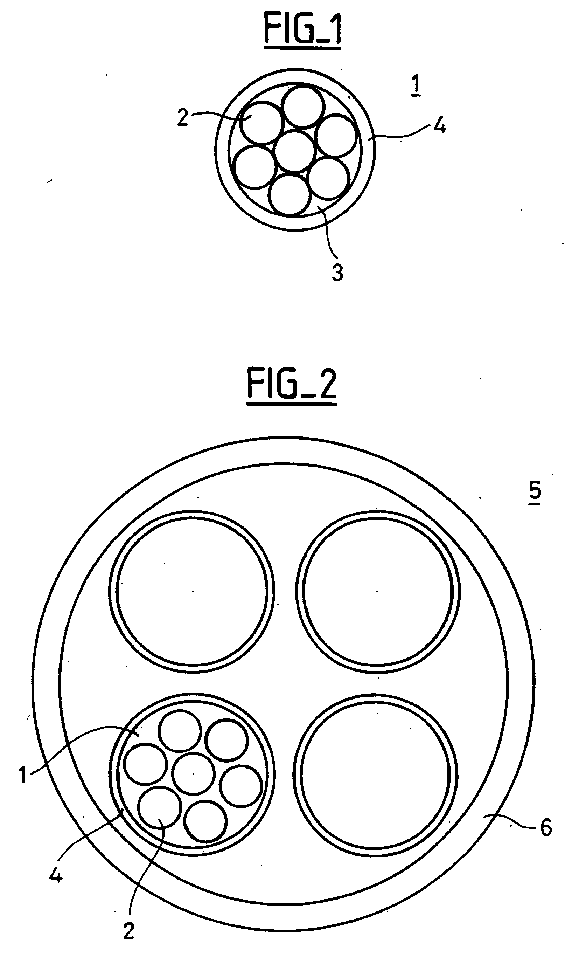

La figure 1 montre une vue en coupe d'un module 1 de câble de télécommunication comprenant au moins une, en général un ensemble de plusieurs fibres optiques 2. Ces fibres optiques 2 sont entourées par un tube flexible 4, appelé peau. L'espace entre les fibres est généralement occupé par un gel hydrophobe 3, par exemple à base de silicones. On peut aussi utiliser une poudre gonflante ou ne rien déposer entre les fibres. La peau 4 est appliquée sur l'ensemble de fibres optiques par exemple par extrusion. L'épaisseur de la peau 4 est de préférence faible, par exemple comprise entre 0,05 et 0,25 mm, de préférence 0,15 mm. Une faible épaisseur est recherchée dans la mesure où elle facilite l'accès à la fibre et qu'elle permet de réduire le poids du câble dans son ensemble. La limite inférieure de l'épaisseur est donnée par la protection que la peau apporte à la fibre, et par la contrainte de fabrication de la peau.

La figure 2 montre une représentation schématique d'un câble de télécommunication 5 comprenant plusieurs modules 1 de fibres optiques. Les modules 1 sont assemblées et entourées par les protections éventuelles, les renforts étant inclus u non dans la gaine externe 6. Dans l'exemple de la figure, les protections et renforts éventuels ne sont pas représentés.

Selon l'invention, on entend par « élastomère thermoplastique à segments souples diol» un copolymère comportant des segments qui peuvent être des blocs polyéther ou polymèrediol.

Par exemple, l'élastomère thermoplastique à segments souples diol est choisi dans le groupe comprenant:
(i) polyétherester, par exemple comprenant des séquences polyéther à extrémités hydroxy liées à des séquences polyester à extrémités acides, cette structure pouvant aussi comprendre des diols (par exemple butanediol-1,4);
(ii) polyuréthanneéther, par exemple comprenant des séquences polyéther à extrémités hydroxy liées à des diisocyanates par des fonctions uréthannes;
(iii) polyuréthanneester, par exemple comprenant des séquences polyester à extrémités hydroxy liées à des diisocyanates par des fonctions uréthannes;
(iv) polyuréthanneétherester, par exemple comprenant des séquences polyester et des séquences polyéther à extrémités hydroxy, ces séquences étant liées à des restes diisocyanates par des fonctions uréthanne. On peut aussi avoir des chaînes polyétherpolyester à extrémités hydroxy liées à des diisocyanates par des fonctions uréthannes ;
(v) polyétheramides, des polyéthers à séquences polyamides, par exemple obtenus par réaction entre des séquences polyamides à bouts de chaîne diamine avec des séquences polyoxyalkylènes à bouts de chaîne dicarboxyliques ou entre des séquences polyamides à bouts de chaîne dicarboxyliques avec des séquences polyoxyalkylènes à bouts de chaîne diamine ou entre des séquences polyamides à bouts de chaîne dicarboxyliques avec des polyétherdiols, les polyétheramides obtenus étant alors des polyétheresteramides.

Dans la suite du texte on désigne ces chaînes (polyéther, polyester ou polyétherpolyester) à extrémités hydroxy par le terme "polymèrediol".

Ces polymères peuvent être présents seuls ou en mélange.

Les polyétheresters sont des copolyesters thermoplastiques élastomères. Ce sont des polymères linéaires constitués d'une part de séquences polyesters, produit de la réaction de dérivés dicarboxyliques (téréphtalate, isophtalate, etc) et de diols (éthylèneglycol, 1,4-butanediol, cyclohexanediméthanol, etc), et d'autre part de séquences polyéther (polytétraméthylène-étherglycol, polyoxypropylèneglycol, polyéthylèneglycol) (segments souples).

Les propriétés élastomères sont apportées par des segments souples dans la chaîne polymère (copolyesters avec des segments polyéther). Les diols de faible masse conduisent à des segments durs dans la chaîne linéaire copolyester. Les propriétés élastomères du produit final dépendent du rapport segment dur/segment souple et du stade de cristallisation. Les segments durs contribuent à la force et à la rigidité du copolymère final tandis que les segments souples apportent la flexibilité. Ces copolymères sont généralement préparés en deux étapes:
- une transestérification; et
- une polycondensation

Un exemple d'un produit commercial est le polymère Hytrel®, de Dupont. Il s'agit de copolymères blocs constitués de segments durs (cristallins) de polybutylène téréphtalate et de segments mous (amorphes) de longues chaînes glycoliques. Les propriétés de ce matériau dépendent de la valeur du rapport entre les segments durs et les segments mous, et de leur arrangement. L'acronyme international pour ces élastomères thermoplastiques est TEEE (élastomère éther-ester thermoplastique).

Les polyuréthannes thermoplastiques élastomères ou TPU sont des copolymères à base polyuréthanne qui peuvent être obtenus par réaction conjointe d'un polymèrediol (ou macroglycol avec un poids moléculaire par exemple compris entre 1000 et 3500) et éventuellement un diol (ou allongeur de chaîne de poids moléculaire faible, généralement inférieur à 300) sur un diisocyanate. La synthèse peut avoir lieu en deux étapes. Les segments souples et durs de l'élastomère sont apportés respectivement par le polymèrediol, qui représente les blocs du polymère thermoplastique élastomère, et par l'allongeur de chaîne. Les segments durs s'associent par liaison hydrogène et les groupes diisocyanate de chaînes voisines s'associent entre eux pour former un réseau cristallin dans une chaîne souple; on obtient ainsi l'équivalent d'un thermoplastique partiellement cristallisé.

Parmi les TPU, on distingue ceux dont les polymèrediols sont de type polyester(glycol) tels que le polyéthylèneadipate, le polybutylène-1,4-adipate, le poly(E-caprolactameglycol, etc, et ceux dont les polymèrediols sont de type polyéther(glycol), tels que le polypropylèneglycol, le polyoxytétraméthylèneglycol, le polyoxypropylènepolyoxyéthylèneglycol, etc. Le polymèrediol peut aussi être de nature mixte, i.e. polyétherester. Le diphénylèneméthanediisocyanate (MDI) est un diisocyanate couramment utilisé, tandis que le 1,4-butanediol est un allongeur de chaîne couramment utilisé.

Des exemples de produits commerciaux sont Elastollan®1185 (PU-éther), Elastollan®1190 (PU-éther), Elastollan®C85 (PU-ester), Elastollan®C90 (PU-ester), et Desmopan®588 (PU-étherester), Desmopan®385 (PU-étherester), les polymères de la gamme Elastollan® étant disponibles chez BASF et ceux de la gamme Desmopan® chez Bayer.

Les élastomères thermoplastiques peuvent être modifiés par l'addition de charges telles que le noir de carbone, la silice, le kaolin, l'alumine, 1 l'argile, le talc, la craie, etc. Ces charges peuvent être traitées en surface par des silanes, des polyéthylèneglycols ou toute autre molécule de couplage.

En outre, les compositions peuvent être assouplies par des charges de type plastifiants tels que les huiles minérales dérivées du pétrole, les esters de l'acide phtalique ou de l'acide sébacique, les plastifiants polymères liquides tels que le polybutadiène de faible masse éventuellement carboxylé, et d'autres plastifiants bien connus de l'homme du métier.

Par ailleurs, les compositions peuvent être rendues plus résistantes au feu par addition d'ignifugeants.

Le taux de charge de ces charges, plastifiants ou autres dans l'élastomère thermoplastique est classique, et peut varier dans de larges mesures.

Ainsi, selon une variante, la peau de protection selon l'invention est constituée d'un élastomère thermoplastique chargé, les charges étant présentes en une quantité de préférence allant jusqu'à 100 parties pour 100 parties d'élastomère thermoplastique.

Il reste possible d'ajouter à l'élastomère thermoplastique des charges et adjuvants qui permettent d'améliorer les propriétés de la peau formée. On peut notamment utiliser les charges minérales connues en soi pour modifier les propriétés mécaniques de déformation ou encore les propriétés de résistance à la chaleur.

L'élastomère thermoplastique à segments souples diol selon l'invention se déchire assez facilement pour permettre un accès aisé à la fibre. En même temps, ce matériau résiste à des températures d'au moins 130°C et empêche donc la peau de protection de se ramollir lors de l'application de la gaine du câble. Selon un mode de réalisation, la peau de protection peut être extrudée à une épaisseur faible, qui peut descendre jusqu'à 0,05 mm. Selon un autre mode de réalisation, la peau de protection peut être extrudée à des vitesses élevées. Il est également possible d'appliquer la peau de protection par moussage chimique ou physique.

Plus généralement, l'invention propose d'utiliser un matériau présentant une ou plusieurs des caractéristiques suivantes :
- point de fusion supérieur à 130°C, de préférence supérieur à 140°C.
- résistance initiale au déchirement (mesuré selon la norme ASTM D1004) inférieure à 120, de préférence inférieure à 60, encore préféré inférieure à 40 kN/m

De préférence, le matériau proposé présente un allongement à la rupture (mesuré selon la norme ASTM 638) compris entre 50 et 300% et une résistance à la traction (mesuré selon la norme ASTM 638) compris entre 5 et 15 MPa.

De préférence, le matériau est flexible, avec une dureté (mesurée selon la norme ASTM D2240) Shore D inférieure à 50, une dureté inférieure à 40 étant préférée.

De préférence, la peau de protection en élastomère thermoplastique à segments souples diols présente un indice de fluidité à chaud (mesuré selon la norme ASTM 1238) supérieur ou égal à 2 g/10min. Un tel matériau peut être appliqué sur les fibres optiques 2 à une vitesse élevée sans apparition de défauts tels que des défauts de surface de la peau de protection. On peut notamment atteindre des vitesses supérieures à 200m/min, voire 300 ou 400 m/min.

Un exemple de matériau selon l'invention est commercialisé sous le nom Hytrel® grade G3548L par Dupont de Nemours. Ses caractéristiques sont les suivantes :
- point de fusion 156°C ;
- résistance initiale à la déchirure 60kN/m ;
- allongement à la rupture 215% ;
- résistance à la traction à la rupture 8,6 MPa ;
- Dureté Shore D 35 ; et
- indice de fluidité à chaud 10 g/10min.

Dans un autre exemple on utilise un élastomère thermoplastique à segments souples diol référencé HTR 8351 NC-010 par Dupont de Nemours. Ce produit présente les caractéristiques suivantes :
- point de fusion 140°C ;
- résistance initiale à la déchirure inférieure à 20kN/m ;
- allongement à la rupture 160% ;
- résistance à la traction à la rupture 10 MPa ;
- Dureté Shore D 23 ; et
- indice de fluidité à chaud 2 g/10min.

Bien entendu, la présente invention n'est pas limitée aux exemples et modes de réalisation décrits et représentés, mais elle est susceptible de nombreuses variantes accessibles à l'homme de l'art.

## Revendications

1. Un module (1) de câble de télécommunication **caractérisé en ce qu'**il comprend autour d'au moins une fibre optique (2) une peau de protection (4) en élastomère thermoplastique à segments souples diol, dont le point de fusion est supérieur à 130°C et dont la résistance initiale au déchirement est inférieure à 120kN/m.

2. Le module selon la revendication 1, **caractérisé en ce que** l'élastomère thermoplastique est un élastomère éther-ester thermoplastique.

3. Le module selon la revendication 1 ou 2, **caractérisé en ce que** l'élastomère thermoplastique est un copolymère bloc polybutylène téréphtalate glycol.

4. Le module selon l'une des revendications 1 à 3, **caractérisé en ce que** l'élastomère thermoplastique comprend une charge.

5. Le module selon la revendication 4, **caractérisé en ce que** la charge est choisie parmi le noir de carbone, la silice, le kaolin, l'alumine, l'argile, le talc, la craie, la magnésie, le dioxyde de titane.

6. Le module selon l'une des revendications 1 à 5, **caractérisé en ce que** l'élastomère thermoplastique comprend un ignifugeant.

7. Le module selon l'une des revendications 1 à 6, **caractérisé en ce que** l'élastomère thermoplastique possède une dureté Shore D inférieure à 50.

8. Le module selon l'une des revendications 1 à 7, **caractérisé en ce que** le point de fusion du matériau de la peau est d'au moins 140°C.

9. Le module selon l'une des revendications 1 à 8, **caractérisé en ce que** la résistance initiale au déchirement du matériau de la peau est inférieure à 60kN/m.

10. Le module selon l'une des revendications 1 à 9, **caractérisé en ce que** l'allongement à rupture du matériau de la peau est compris entre 50 et 300%.

11. Le module selon l'une des revendications 1 à 10, **caractérisé en ce que** la résistance à la traction du matériau de la peau est comprise entre 5 et 15 MPa.

12. Le module selon l'une des revendications 1 à 11, **caractérisé en ce que** l'indice de fluidité à chaud du matériau de la peau est supérieur ou égal à 2 g/10min.

13. Un procédé de fabrication d'un module de câble de télécommunication selon l'une des revendications 1 à 12, comprenant l'étape d'application d'une peau de protection en élastomère thermoplastique à segments souples diols sur ladite au moins une fibre optique.

14. Procédé selon la revendication 13, **caractérisé en ce que** l'application de la peau de protection est réalisée par extrusion.

15. Un câble de télécommunication comprenant au moins un module selon l'une des revendications 1 à 12.

## Claims

1. A telecommunications cable module (1), **characterised in that** it comprises, around at least one optical fibre (2), a protective skin (4) of thermoplastic elastomer having flexible diol segments, the melting point of which is higher than 130°C and the initial tear strength of which is less than 120 kN/m.

2. The module according to claim 1, **characterised in that** the thermoplastic elastomer is an ether-ester thermoplastic elastomer.

3. The module according to claim 1 or 2, **characterised in that** the thermoplastic elastomer is a polybutylene terephthalate glycol block copolymer.

4. The module according to one of claims 1 to 3, **characterised in that** the thermoplastic elastomer comprises a filler.

5. The module according to claim 4, **characterised in that** the filler is selected from carbon black, silica, kaolin, alumina, clay, talc, chalk, magnesia and titanium dioxide.

6. The module according to one of claims 1 to 5, **characterised in that** the thermoplastic elastomer comprises a flame-retardant.

7. The module according to one of claims 1 to 6, **characterised in that** the thermoplastic elastomer has a Shore D hardness of less than 50.

8. The module according to one of claims 1 to 7, **characterised in that** the melting point of the material of the skin is at least 140°C.

9. The module according to one of claims 1 to 8, **characterised in that** the initial tear strength of the material of the skin is less than 60 kN/m.

10. The module according to one of claims 1 to 9, **characterised in that** the elongation at break of the material of the skin is between 50 and 300 %, inclusive.

11. The module according to one of claims 1 to 10, **characterised in that** the tensile strength of the material of the skin is between 5 and 15 MPa, inclusive.

12. The module according to one of claims 1 to 11, **characterised in that** the melt flow index of the material of the skin is greater than or equal to 2 g/10 min.

13. A method of producing a telecommunications cable module according to one of claims 1 to 12, comprising the step of applying a protective skin of thermoplastic elastomer having flexible diol segments to said at least one optical fibre.

14. Method according to claim 13, **characterised in that** application of the protective skin is accomplished by means of extrusion.

15. A telecommunications cable comprising at least one module according to one of claims 1 to 12.

## Patentansprüche

1. Fernmeldekabelmodul (1), **dadurch gekennzeichnet, dass** es um wenigstens eine optische Faser (2) eine Schutzhaut (4) aus thermoplastischem Elastomer mit elastischen Diolsegmenten umfasst, dessen Schmelzpunkt über 130°C liegt und dessen Reißfestigkeit unter 120 kN/m ist.

2. Modul nach Anspruch 1, **dadurch gekennzeichnet, dass** das thermoplastische Elastomer ein thermoplastisches Ether-Ester-Elastomer ist.

3. Modul nach Anspruch 1 oder 2, **dadurch gekennzeichnet, dass** das thermoplastische Elastomer ein Polybutylenterephthalat-Glykol-Blockcopolmer ist.

4. Modul nach einem der Ansprüche 1 bis 3, **dadurch gekennzeichnet, dass** das thermoplastische Elastomer einen Füllstoff umfasst.

5. Modul nach Anspruch 4, **dadurch gekennzeichnet, dass** der Füllstoff unter Ruß, Siliciumdioxid, Kaolin, Aluminiumoxid, Ton, Talk, Kreide, Magnesia, Titandioxid ausgewählt ist.

6. Modul nach einem der Ansprüche 1 bis 5, **dadurch gekennzeichnet, dass** das thermoplastische Elastomer einen Flammhemmstoff umfasst.

7. Modul nach einem der Ansprüche 1 bis 6, **dadurch gekennzeichnet, dass** das thermoplastische Elastomer eine Shore D-Härte von unter 50 besitzt.

8. Modul nach einem der Ansprüche 1 bis 7, **dadurch gekennzeichnet, dass** der Schmelzpunkt des Materials der Haut wenigstens 140°C ist.

9. Modul nach einem der Ansprüche 1 bis 8, **dadurch gekennzeichnet, dass** die Anfangsreißfestigkeit des Materials der Haut unter 60 kN/m liegt.

10. Modul nach einem der Ansprüche 1 bis 9, **dadurch gekennzeichnet, dass** die Bruchdehnung des Materials der Haut zwischen 50 und 300% liegt.

11. Modul nach einem der Ansprüche 1 bis 10, **dadurch gekennzeichnet, dass** die Reißfestigkeit des Materials der Haut zwischen 5 und 15 MPa ist.

12. Modul nach einem der Ansprüche 1 bis 11, **dadurch gekennzeichnet, dass** der Schmelzindex des Materials der Haut über oder gleich 2 g/10 min ist.

13. Verfahren zur Herstellung eines Fernmeldekabelmodules nach einem der Ansprüche 1 bis 12, umfassend die Stufe des Aufbringens einer Schutzhaut aus thermoplastischem Elastomer mit elastischen Diolsegmenten auf die genannte wenigstens eine optische Faser.

14. Verfahren nach Anspruch 13, **dadurch gekennzeichnet, dass** die Aufbringung der Schutzhaut durch Extrudieren erfolgt.

15. Fernmeldekabel, das wenigstens ein Modul nach einem der Ansprüche 1 bis 12 umfasst.
